# EUROPEAN PATENT APPLICATION

(11) **EP 4 122 583 A1**
(43) Date of publication of application: **25.01.2023**
(21) Application number: 21782418.4
(22) Date of filing: 03.03.2021
(51) Int. Cl.: B01D 53/94, F01N 3/08, F01N 3/24

(54) **EXHAUST GAS DENITRATION DEVICE**

(30) Priority: 30.03.2020 JP 2020059391
(71) Applicant: Hitachi Zosen Corporation, Osaka-shi, Osaka 559-8559 (JP)
(72) Inventor: KODAMA, Tetsuo, Osaka-shi, Osaka 559-8559 (JP)
(74) Representative: Grünecker Patent- und Rechtsanwälte PartG mbB
(86) International application number: PCT/JP2021/008040
(87) International publication number: WO 2021/199858

(57) **Abstract**

A NOx reduction device for an exhaust gas 10 includes: a tubular container 11; a mixing chamber 20 that is one of two rooms formed by dividing an inside of the container 11 in a direction orthogonal to a direction of an axis X of the container 11, the mixing chamber 20 extending from one end of the container 11 in the direction of the axis X to a point between the one end and the other end of the container in the direction of the axis X and allowing an exhaust gas of an engine flowed therein to be mixed with a reducing agent; a first reaction chamber 26 that is the other of the two rooms, the first reaction chamber 26 extending from the one end of the container 11 in the direction of the axis X to a point between the one end and the other end of the container in the direction of the axis X and containing a catalyst 28 that the exhaust gas coming from the mixing chamber 20 passes; and a second reaction chamber 27 that is formed on the other end of the container 11 in the direction of the axis X, the second reaction chamber 27 having a larger cross-sectional area orthogonal to the direction of the axis X than the first reaction chamber 26 and containing a catalyst 29 that the exhaust gas coming from the first reaction chamber 26 passes.

## Description

### TECHNICAL FIELD

The present application relates to a NOx reduction device for an exhaust gas.

### BACKGROUND ART

As disclosed by Patent Document 1, for example, a technique of detoxifying nitrogen oxide (NOx) contained in an exhaust gas emitted from a diesel engine has been proposed. An engine disclosed by Patent Document 1 includes an exhaust pipe (an exhaust gas receiver), a SCR reactor provided downstream of the exhaust pipe, and an injection valve that atomizes a reducing agent in the exhaust pipe. According to Patent Document 1, the exhaust gas of the engine is collected to the exhaust pipe and mixed with the reducing agent. The exhaust gas mixed with the reducing agent is emitted from the exhaust pipe and flows into the SCR reactor. In the SCR reactor, NOx in the exhaust gas is reduced when reacts with the reducing agent in the presence of a NOx reduction catalyst (a NOx reduction reaction). Thus, NOx is detoxified.

### CITATION LIST

### PATENT DOCUMENT

PATENT DOCUMENT 1: Japanese Patent No. 5878860

### SUMMARY OF THE INVENTION

### TECHNICAL PROBLEM

According to Patent Document 1, the whole NOx reduction device for the exhaust gas including the exhaust pipe, the SCR reactor, and a pipe connecting the exhaust pipe and the SCR reactor is routed in an engine room, occupying a large space. Thus, it may be difficult to place the NOx reduction device for the exhaust gas in a small engine room. As a solution to the difficulty of placement, a diameter of the connecting pipe can be reduced to reduce its volume. However, this increases a pressure loss in the whole NOx reduction device for the exhaust gas, possibly limiting or interfering with the operation of the engine.

Under these circumstances, a technique disclosed in the present application has been achieved to reduce a space occupied by a NOx reduction device for an exhaust gas without increasing a pressure loss in the whole NOx reduction device for the exhaust gas.

### SOLUTION TO PROBLEM

A NOx reduction device for an exhaust gas of the present application includes a container, a mixing chamber, a first reaction chamber, and a second reaction chamber. The container is tubular. The mixing chamber is one of two rooms formed by dividing an inside of the container in a direction orthogonal to an axial direction of the container, and extends from one end of the container in the axial direction to a point between the one end and the other end of the container in the axial direction. The mixing chamber allows an exhaust gas of an engine flowed therein to be mixed with a reducing agent. The first reaction chamber is the other of the two rooms, and extends from the one end of the container in the axial direction to a point between the one end and the other end of the container in the axial direction. The first reaction chamber contains a catalyst that the exhaust gas coming from the mixing chamber passes. The second reaction chamber is formed on the other end of the container in the axial direction, and has a larger cross-sectional area orthogonal to the axial direction than the first reaction chamber. The second reaction chamber contains a catalyst that the exhaust gas coming from the first reaction chamber passes.

### ADVANTAGES OF INVENTION

According to the present application, a space occupied by the NOx reduction device for the exhaust gas can be reduced without increasing a pressure loss in the whole NOx reduction device for the exhaust gas.

### BRIEF DESCRIPTION OF THE DRAWINGS

[FIG. 1] FIG. 1 is a piping system diagram illustrating a schematic configuration of a marine diesel engine equipped with a NOx reduction device for an exhaust gas of an embodiment.
[FIG. 2] FIG. 2 is a diagram illustrating a schematic configuration of the NOx reduction device for the exhaust gas of the embodiment.
[FIG. 3] FIG. 3 is a cross-sectional view taken along line A-A in FIG. 2.
[FIG. 4] FIG. 4 is a cross-sectional view taken along line B-B in FIG. 2.
[FIG. 5] FIG. 5 is a diagram illustrating a schematic configuration of a NOx reduction device for an exhaust gas of a variation of the embodiment.
[FIG. 6] FIG. 6 is a cross-sectional view taken along line C-C in FIG. 5.

### DESCRIPTION OF EMBODIMENTS

Embodiments of the present application will be described below with reference to the drawings. The following embodiments are exemplary ones in nature and do not intend to limit the scope, applications or use of the present disclosure.

A NOx reduction device for an exhaust gas 10 of the present embodiment is provided in, for example, a four-cylinder two-stroke marine diesel engine (will be hereinafter simply referred to as an "engine"). The NOx reduction device for the exhaust gas 10 causes NOx reduction, i.e., allows nitrogen oxide (will be hereinafter referred to as "NOx") in an exhaust gas emitted from an engine 1 to react with a reducing agent in the presence of a NOx reduction catalyst, thereby detoxifying NOx.

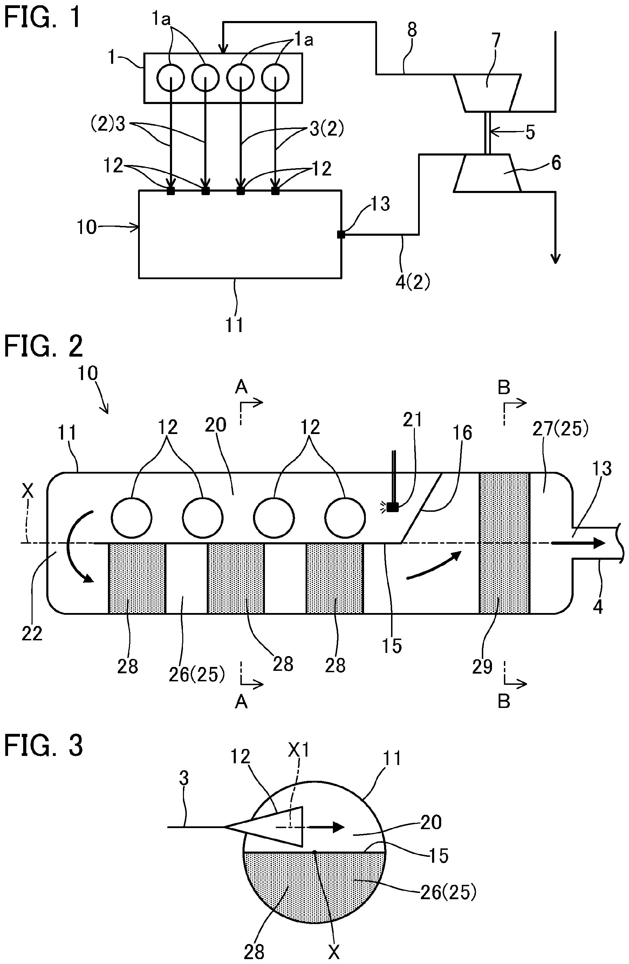

As shown in FIG. 1, the engine 1 (the marine diesel engine) has four exhaust ports 1a from which the exhaust gas generated in the cylinders is emitted. The exhaust ports 1a are connected to an exhaust passage 2, and the NOx reduction device for the exhaust gas 10 of the present embodiment is provided in the exhaust passage 2. Specifically, the four exhaust ports 1a are respectively connected to upstream passages 3 constituting part of the exhaust passage 2.

The engine 1 is not limited to have the above-described number of cylinders and exhaust ports 1a.

Four upstream passages 3 are connected to the NOx reduction device for the exhaust gas 10. Specifically, the exhaust ports 1a of the engine 1 are connected to the NOx reduction device for the exhaust gas 10 via the four upstream passages 3. A downstream passage 4 constituting part of the exhaust passage 2 is connected to the NOx reduction device for the exhaust gas 10. The downstream passage 4 is equipped with a turbocharger 5.

The turbocharger 5 includes a turbine 6 and a compressor 7. The turbine 6 is connected to the downstream passage 4, and the compressor 7 is connected to an air supply passage 8. The compressor 7 is driven to rotate when the exhaust gas flows from the downstream passage 4 (the exhaust passage 2) to the turbine 6. The compressor 7 compresses the air supplied from the air supply passage 8. The compressed air is supplied to four air supply ports (not shown) of the engine 1 via the air supply passage 8.

### <NOx Reduction Device for Exhaust Gas>

The configuration of the NOx reduction device for the exhaust gas 10 of the present embodiment will be described in detail below with reference to FIGS. 2 to 4. The NOx reduction device for the exhaust gas 10 includes a container 11, in which a mixing chamber 20 and a reaction chamber 25 are provided. The NOx reduction device for the exhaust gas 10 has a room for mixing the exhaust gas with the reducing agent and a room for reducing NOx in the exhaust gas mixed with the reducing agent in the single container 11.

As shown in FIG. 2, the container 11 is a pressure-resistant container, and is in a tubular shape with both ends closed. The container 11 is provided, for example, above the engine 1, with its axis X extending in a horizontal direction. That is, the container 11 is formed in a cylindrical shape extending in the horizontal direction. The container 11 may be arranged with the axis X extending in a vertical direction.

The container 11 has a plurality of (four in this embodiment) inlet parts 12 and a single outlet part 13. The inlet parts 12 are connected to the upstream passages 3, and allow the exhaust gas of the engine to enter the container 11 (the mixing chamber 20). The outlet part 13 is connected to the downstream passage 4, and allows the exhaust gas in the container 11 (the reaction chamber 25) to be emitted to the downstream passage 4.

The mixing chamber 20 is one of two rooms formed by dividing an inside of the container 11 in a direction orthogonal to a direction of the axis X of the container 11 (i.e., a radial direction of the container 11), and extends from one end (left end in FIG. 2) of the container 11 in the direction of the axis X to a point between the one end and the other end of the container in the direction of the axis X. The mixing chamber 20 is a room in which the exhaust gas of the engine flows to be mixed with the reducing agent.

The reaction chamber 25 includes a first reaction chamber 26 and a second reaction chamber 27 communicating with each other.

The first reaction chamber 26 is the other of the two rooms formed by dividing the inside of the container 11 in the direction orthogonal to the direction of the axis X of the container 11 (i.e., the radial direction of the container 11), and extends from the one end of the container 11 the direction of the axis X (the left end in FIG. 2, and may be referred to as "the one end of the container 11") to a point between the one end and the other end of the container 11 in the direction of the axis X. The first reaction chamber 26 is a room containing a catalyst 28 that the exhaust gas coming from the mixing chamber 20 passes.

The second reaction chamber 27 is a room formed on the other end of the container 11 in the direction of the axis X (at the right end in FIG. 2, and may be referred to as "the other end of the container 11"). The second reaction chamber 27 has a transverse cross section (a cross section orthogonal to the direction of the axis X) with a larger area than the first reaction chamber 26. The second reaction chamber 27 is a room containing a catalyst 29 that the exhaust gas coming from the first reaction chamber 26 passes.

Specifically, divider walls 15 and 16 divide the inside of the container 11 into the mixing chamber 20 and the reaction chamber 25 (the first reaction chamber 26 and the second reaction chamber 27). The mixing chamber 20, the first reaction chamber 26, and the second reaction chamber 27 are formed as exhaust gas passages that the exhaust gas passes in this order.

The divider wall 15 is a plate-shaped member provided at the center of the container 11 in the radial direction and extends along the axis X. The divider wall 15 extends from the one end to the point between the one end and the other end of the container 11 in the direction of the axis X.

The divider wall 15 divides the inside of the container 11 into the mixing chamber 20 and the first reaction chamber 26 in the direction orthogonal to the direction of the axis X (in the radial direction of the container 11). More specifically, the divider wall 15 divides the inside of the container 11 into an upper room and a lower room both extending from the one end to the midpoint of the container 11 in the direction of the axis X. The upper room above the divider wall 15 is the mixing chamber 20, and the lower room below the divider wall 15 is the first reaction chamber 26.

The divider wall 16 is a plate-shaped member extending upward from an end of the divider wall 15 at the point between the one end and the other end of the container 11 in the direction of the axis X (the right end in FIG. 2). The divider wall 16 extends to reach an inner peripheral surface of the container 11 (an inner surface of a cylindrical part of the container 11). The divider wall 16 blocks one end (an upstream end) of the mixing chamber 20.

The mixing chamber 20 defined in this way extends horizontally from the one end of the container 11. The mixing chamber 20 has an upstream end on the right in FIG. 2 and a downstream end on the left in FIG. 2. The downstream end of the mixing chamber 20 communicates with the first reaction chamber 26 through a connecting passage 22. The divider wall 15 is separated from an inner surface of the one end of the container 11 to form the connecting passage 22.

The four inlet parts 12 are located in the mixing chamber 20. The four inlet parts 12 are provided on the lateral side of the container 11 and are arranged in order in the direction of the axis X. That is, the inlet parts 12 are arranged in the extending direction of the mixing chamber 20. The exhaust gas flows into the mixing chamber 20 through the inlet parts 12.

As shown in FIG. 3, each inlet part 12 is in a tubular shape and penetrates the container 11. The inlet part 12 is in a conical shape flared toward its end inside the container. The inlet part 12 is arranged with an opening axis X1 of the inside end extending in the horizontal direction.

The NOx reduction device for the exhaust gas 10 includes a nozzle 21 arranged in the mixing chamber 20. The nozzle 21 sprays at least one of the reducing agent or a precursor of the reducing agent into the exhaust gas in the mixing chamber 20. Specifically, the nozzle 21 is arranged near the upstream end of the mixing chamber 20 and sprays the reducing agent toward the downstream end of the mixing chamber 20.

The nozzle 21 supplies the reducing agent required to cause the NOx reduction in the reaction chamber 25, such as ammonia, to the exhaust gas in the mixing chamber 20. Ammonia water needs to be carefully managed. For this reason, in the present embodiment, a tank (not shown) connected to the nozzle 21 via a supply pipe stores an aqueous solution of urea as the precursor of the reducing agent.

In the present embodiment, the nozzle 21 sprays urea water into the exhaust gas in the mixing chamber 20 so that urea is hydrolyzed to generate ammonia under high-temperature heat of the exhaust gas. That is, the nozzle 21 of the present embodiment sprays an aqueous solution of urea that is the precursor of the reducing agent. In this way, the exhaust gas is mixed with the reducing agent (ammonia) in the mixing chamber 20.

The first reaction chamber 26 defined by the divider wall 15 extends horizontally from the one end of the container 11 in the same manner as the mixing chamber 20. The first reaction chamber 26 has an upstream end on the left in FIG. 2 and a downstream end on the right in FIG. 2. One end (an upstream end) of the first reaction chamber 26 communicates with the mixing chamber 20 through the connecting passage 22.

The first reaction chamber 26 contains a plurality of catalysts 28 in the form of a unit. The catalysts 28 are arranged in order in the extending direction of the first reaction chamber 26. That is, the catalysts 28 are arranged at predetermined intervals in the direction of the axis X. Each catalyst 28 spreads over almost the entire transverse cross section of the first reaction chamber 26 (see FIG. 3).

At least one of a NOx reduction catalyst or a hydrolysis catalyst is used as the catalysts 28. Specifically, all the catalysts 28 may be the NOx reduction catalysts or the hydrolysis catalysts, or the NOx reduction catalysts and the hydrolysis catalysts may be used in combination. When the NOx reduction catalysts and the hydrolysis catalysts are combined, the hydrolysis catalysts are arranged on the upstream side, and the NOx reduction catalysts are arranged on the downstream side.

The first reaction chamber 26 is configured to mainly cause the NOx reduction of the exhaust gas when the exhaust gas coming from the mixing chamber 20 passes through the NOx reduction catalysts. Specifically, NOx in the exhaust gas is reduced when reacts with the reducing agent in the presence of the NOx reduction catalysts in the first reaction chamber 26.

The first reaction chamber 26 is configured to cause hydrolysis of urea (the precursor of the reducing agent) when the exhaust gas coming from the mixing chamber 20 passes through the hydrolysis catalysts. Specifically, urea unhydrolyzed in the mixing chamber 20 and the connecting passage 22 is hydrolyzed into ammonia (the reducing agent) in the presence of the hydrolysis catalysts in the first reaction chamber 26.

The second reaction chamber 27 is formed on the one end of the container 11. The second reaction chamber 27 occupies the entire transverse cross section (a cross section orthogonal to the direction of the axis X) of the container 11. Specifically, the second reaction chamber 27 has a passage with a larger cross-sectional area than the first reaction chamber 26. The second reaction chamber 27 communicates with the other end (the downstream end) of the first reaction chamber 26.

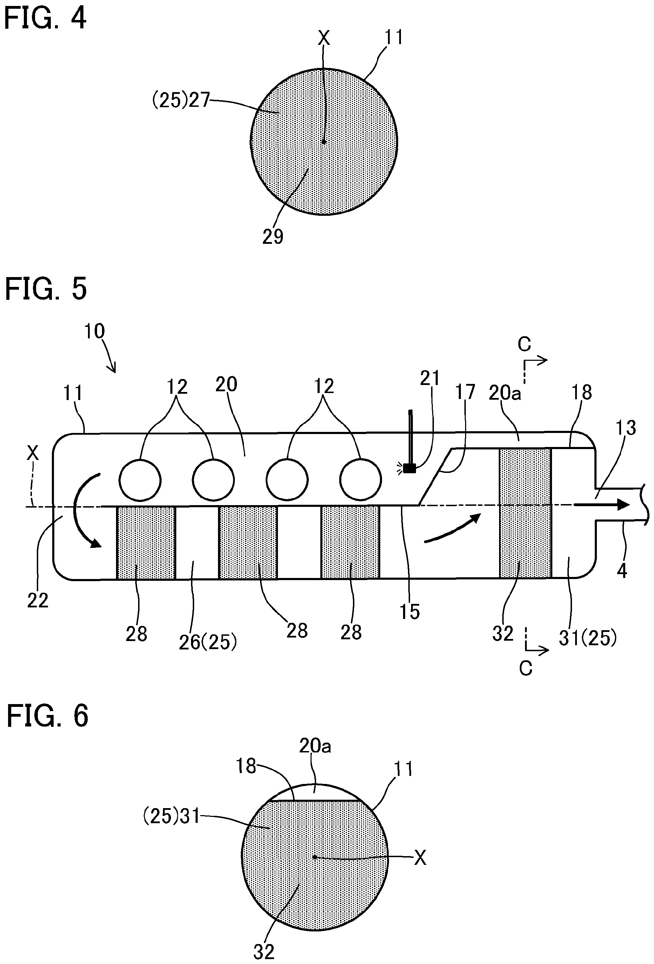

The second reaction chamber 27 contains a catalyst 29 in the form of a unit. The catalyst 29 spreads over almost the entire transverse cross section of the second reaction chamber 27 as shown in FIG. 4. The catalyst 29 is the NOx reduction catalyst.

The outlet part 13 is located in the second reaction chamber 27. The outlet part 13 is formed at the other end of the container 11 and serves as an outlet port that opens in the second reaction chamber 27. The outlet part 13 is coaxial with the axis X.

The second reaction chamber 27 is configured to cause the NOx reduction of the exhaust gas when the exhaust gas coming from the first reaction chamber 26 passes through the NOx reduction catalyst, and then emit the exhaust gas from the outlet part 13. Specifically, NOx in the exhaust gas is reduced when reacts with the reducing agent in the second reaction chamber 27, and then the exhaust gas is emitted out.

The other end (downstream end) of the first reaction chamber 26 is gradually widened toward the second reaction chamber 27. Specifically, the divider wall 16 is inclined from the end of the divider wall 15 toward the other end of the container 11 as it goes closer to the inner peripheral surface of the container 11. The inclined divider wall 16 guides the exhaust gas coming from the first reaction chamber 26 upward in the second reaction chamber 27. Thus, the exhaust gas from the first reaction chamber 26 flows evenly throughout the second reaction chamber 27 (i.e., throughout the catalyst 29).

A selective catalytic reduction (SCR) catalyst is used as the NOx reduction catalyst. The SCR catalyst selectively causes a reduction reaction between NOx in the exhaust gas and the reducing agent. Any catalyst, for example, metal oxide catalysts such as alumina, zirconia, and vanadia, and zeolite catalysts may be used as the SCR catalyst, or these catalysts may be used in combination.

### <Operation>

How the NOx reduction device for the exhaust gas 10 configured in this manner operates will be described below. In the NOx reduction device for the exhaust gas 10, flows of the exhaust gas emitted from the exhaust ports 1a of the engine 1 go through the upstream passages 3 and the inlet parts 12 to enter (meet together in) the mixing chamber 20 in the container 11. The inlet parts 12, which are conical in shape and flared toward the inside end, allow the exhaust gas to widely spread in the mixing chamber 20.

The exhaust gas flowed from the inlet parts 12 into the mixing chamber 20 is mixed with urea water sprayed from the nozzle 21. The urea water is hydrolyzed under high-temperature heat of the exhaust gas as represented by the following formula (1), generating ammonia gas (NH₃) as the reducing agent.

(NH₂)₂CO + H₂O → 2NH₃ + CO₂ ... (1)

The ammonia gas generated in the mixing chamber 20 and the exhaust gas flow together through the mixing chamber 20, the connecting passage 22, the first reaction chamber 26, and the second reaction chamber 27 in this order (see thick arrows in FIG. 2). NOx in the exhaust gas is reduced when reacts with the ammonia gas in the presence of the NOx reduction catalysts in the first reaction chamber 26 and the second reaction chamber 27. Specifically, NOx reduction represented by the following formulae (2) and (3) occurs between NOx in the exhaust gas and the ammonia gas. NOx is decomposed into nitrogen and water, and thus detoxified.

4NH₃ + 4NO + O₂ →4N₂ + 6H₂O ... (2)

2NH₃ + NO + NO₂ → 2N₂ + 3H₂O ... (3)

If the hydrolysis catalyst is provided in the first reaction chamber 26, the urea water is hydrolyzed in the presence of the hydrolysis catalyst as represented by the formula (1).

The exhaust gas from which NOx is removed in the reaction chamber 25 (the first reaction chamber 26 and the second reaction chamber 27) is emitted to the downstream passage 4 through the outlet part 13 and supplied to the turbine 6.

As described above, the NOx reduction device for the exhaust gas 10 of the above-described embodiment includes the mixing chamber 20 and the reaction chamber 25 (the first reaction chamber 26 and the second reaction chamber 27) formed in the single container 11. Thus, the NOx reduction device for the exhaust gas can be downsized as a whole and occupies less space as compared to an existing NOx reduction device for the exhaust gas having the exhaust pipe and the SCR reactor connected via a connection pipe.

The reaction chamber 25 of the embodiment includes the first reaction chamber 26 and the second reaction chamber 27. The first reaction chamber 26 is one of the two rooms formed by dividing the inside of the container 11 in the direction orthogonal to the direction of the axis X of the container 11 (the radial direction of the container 11) and extends from the one end of the container 11 in the direction of the axis X to a point between the one end and the other end of the container 11 in the direction of the axis X. The second reaction chamber 27 is formed on the other end of the container 11 in the direction of the axis X and has a transverse cross section with a larger area than the first reaction chamber 26.

In this configuration, the second reaction chamber 27 having an exhaust gas passage with a large cross-sectional area can be provided as part of the reaction chamber 25. That is, the second reaction chamber 27 that is able to reduce the pressure loss of the exhaust gas can be provided. Thus, although the pressure loss increases in the first reaction chamber 26 in which the cross-sectional area of the passage is not so large, the pressure loss in the whole reaction chamber 25 can be reduced to be equal to or less than the pressure loss in an existing reaction chamber.

The NOx reduction device for the exhaust gas 10 of the present embodiment can occupy less space without increasing the pressure loss in the whole NOx reduction device for the exhaust gas.

In the NOx reduction device for the exhaust gas 10 of the embodiment, the other end (downstream end) of the first reaction chamber 26 is gradually widened toward the second reaction chamber 27.

In this configuration, although the other end of the first reaction chamber 26 communicates with a lower part of the second reaction chamber 27, the exhaust gas from the first reaction chamber 26 can flow evenly throughout the second reaction chamber 27 (i.e., throughout the catalyst 29). This allows effective NOx reduction in the second reaction chamber 27.

In the NOx reduction device for the exhaust gas 10 of the embodiment, the catalysts 28 are arranged at predetermined intervals in the first reaction chamber 26 in the direction of the axis X of the container 11.

This configuration allows easy attachment and detachment of the NOx reduction catalysts 28 in the direction of the axis X for maintenance of the NOx reduction catalysts 28.

In the NOx reduction device for the exhaust gas 10 of the embodiment, the catalyst 29 in the second reaction chamber 27 spreads over almost the entire cross section orthogonal to the direction of the axis X of the container 11.

This configuration can increase the amount of the catalyst 29 in the second reaction chamber 27, and correspondingly reduces the amount of the catalysts 28 in the first reaction chamber 26. Consequently, the pressure loss of the exhaust gas passing through the catalysts 28 in the first reaction chamber 26 can be reduced.

### (Variation of Embodiment)

A NOx reduction device for the exhaust gas 10 of this variation is obtained by modifying the mixing chamber and the second reaction chamber of the above-described embodiment as shown in FIGS. 5 and 6. Features different from the above-described embodiment will be described below.

Divider walls 15, 17, and 18 divide an inside of a container 11 into a mixing chamber 20 and a reaction chamber 25 (a first reaction chamber 26 and a second reaction chamber 31).

The mixing chamber 20 of this variation includes a preheat space 20a added to the mixing chamber of the embodiment. The preheat space 20a is part of the mixing chamber 20. The preheat space 20a is a room for preheating a catalyst 32 in a second reaction chamber 31 described later.

The preheat space 20a extends from the upstream end of the mixing chamber of the embodiment toward the other end of the container 11 (i.e., toward the second reaction chamber 31). The preheat space 20a is located on the second reaction chamber 31 and extends along the axis X. The preheat space 20a is formed over the entire length of the second reaction chamber 31 in the direction of the axis X. The preheat space 20a has a transverse cross section (a cross section orthogonal to the direction of the axis X) with a smaller area than the mixing chamber of the embodiment.

The second reaction chamber 31 of this variation is formed on the other end of the container 11 in the direction of the axis X (on the right end in FIG. 5), and has a transverse cross section (a cross section orthogonal to the direction of the axis X) with a larger area than the first reaction chamber 26 in the same manner as the second reaction chamber of the embodiment. The second reaction chamber 31 contains a catalyst 32 that is a NOx reduction catalyst in the form of a unit in the same manner as the second reaction chamber of the embodiment. The catalyst 32 spreads over almost the entire transverse cross section of the second reaction chamber 31 as shown in FIG. 6.

The divider wall 15 is the same as that of the embodiment. The divider wall 17 is a plate-shaped member extending upward from an end of the divider wall 15 at the point between the one end and the other end of the container 11 in the direction of the axis X (the right end in FIG. 5). The divider wall 17 extends very close to an inner peripheral surface of the container 11, but is not in contact with the inner peripheral surface of the container 11. In the same manner as the divider wall of the embodiment, the divider wall 17 is inclined from the end of the divider wall 15 toward the other end of the container 11 (the right end in FIG. 5) as it goes closer to the inner peripheral surface of the container 11.

The divider wall 18 is a plate-shaped member extending from an end of the divider wall 17 (an upper end in FIG. 5) that reached very close to the inner peripheral surface of the container 11 toward the other end of the container 11. The divider wall 18 extends along the axis X. The divider wall 18 divides the inside of the container 11 into the preheat space 20a and the second reaction chamber 31 in the direction orthogonal to the direction of axis X (in the radial direction of the container 11).

The catalyst 32 in the second reaction chamber 31 defined in this way is preheated by the high-temperature heat of the exhaust gas flowed into the preheat space 20a, for example, when the engine 1 starts running. Specifically, the catalyst 32, which is in contact with the preheat space 20a via the divider wall 18, is effectively preheated by the high-temperature heat of the exhaust gas in the preheat space 20a. Thus, the temperature of the catalyst 32 can be raised to an optimum temperature for the NOx reduction. This can accelerate the NOx reduction in the second reaction chamber 31 when the engine starts running.

### (Other Embodiments)

The NOx reduction device for the exhaust gas of the embodiment and the variation of the present application may be modified as described below.

For example, the mixing chamber 20 and the first reaction chamber 26 of the embodiment and the variation may be arranged at opposite positions. Specifically, the upper room in the container 11 may be used as the first reaction chamber 26, and the lower room of the container 11 may be used as the mixing chamber 20.

It has been described in the embodiment and the variation that the inside of the container 11 is divided into the upper and lower rooms serving as the mixing chamber 20 and the first reaction chamber 26, but the present disclosure is not limited to this example. For example, the inside of the container 11 may be divided into left and right rooms when viewed in the direction of the axis X.

In the embodiment and variation described above, the hydrolysis catalyst for accelerating the hydrolysis of the precursor of the reducing agent (urea water) may be provided in the mixing chamber 20 or the connecting passage 22. This configuration allows a sufficient amount of the reducing agent (ammonia gas) to be generated before the precursor of the reducing agent (urea water) flows into the first reaction chamber 26. This can accelerate the NOx reduction in the reaction chamber 25 (the first reaction chamber 26 the second reaction chamber 27 or 31).

It has been described in the embodiment and the variation that the nozzle 21 sprays the urea water as the precursor of the reducing agent, but the present disclosure is not limited to this example. For example, a mixed aqueous solution of high-concentration urea and low-concentration ammonia gas may be used as the precursor of the reducing agent.

In the embodiment and variation described above, the number of inlet parts 12 is not limited to the described number, and may be one or other than four.

It has been described in the embodiment and the variation that the nozzle sprays the reducing agent into the exhaust gas in the mixing chamber 20, but the present disclosure is not limited to this example. The nozzle may spray the reducing agent into the exhaust gas before flowing into the container 11 (the mixing chamber 20).

In the embodiment and the variation described above, the container 11 may be in any other shape than the cylindrical shape. For example, the container 11 may be formed in a tubular shape having a rectangular or oval cross section, or having these cross sections in combination.

In the embodiment and the variation described above, a rectifier may be provided in the container 11 so that the exhaust gas evenly passes throughout the catalysts 28, 29, and 32. The rectifier is provided, for example, in the connecting passage 22, at the upstream end of the first reaction chamber 26, or between the first reaction chamber 26 and the second reaction chamber 27 or 31.

It has been described in the embodiment that the NOx reduction device for the exhaust gas 10 is applied to the marine diesel engine. However, the NOx reduction device for the exhaust gas of the present application is not limited to this engine, and can be applied to the other engines.

### INDUSTRIAL APPLICABILITY

As can be seen in the foregoing, the present disclosure is useful for a NOx reduction device for an exhaust gas.

### DESCRIPTION OF REFERENCE CHARACTERS

- 1: Marine diesel engine
- 10: NOx reduction device for exhaust gas
- 11: Container
- 20: Mixing chamber
- 26: First reaction chamber (reaction chamber)
- 27: Second reaction chamber (reaction chamber)
- 28: Catalyst
- 29: Catalyst
- 31: Second reaction chamber (reaction chamber)
- 32: Catalyst
- X: Axis

## Claims

1. A NOx reduction device for an exhaust gas, comprising:
a tubular container;
a mixing chamber that is one of two rooms formed by dividing an inside of the container in a direction orthogonal to an axial direction of the container, the mixing chamber extending from one end of the container in the axial direction to a point between the one end and the other end of the container in the axial direction and allowing an exhaust gas of an engine flowed therein to be mixed with a reducing agent;
a first reaction chamber that is the other of the two rooms, the first reaction chamber extending from the one end of the container in the axial direction to a point between the one end and the other end of the container in the axial direction and containing a catalyst that the exhaust gas coming from the mixing chamber passes; and
a second reaction chamber that is formed on the other end of the container in the axial direction, the second reaction chamber having a larger cross-sectional area orthogonal to the axial direction than the first reaction chamber and containing a catalyst that the exhaust gas coming from the first reaction chamber passes.

2. The NOx reduction device for the exhaust gas of claim 1, wherein
the second reaction chamber communicates with an end of the first reaction chamber near the other end of the container in the axial direction, and
the end of the first reaction chamber is gradually widened toward the second reaction chamber.

3. The NOx reduction device for the exhaust gas of claim 1 or 2, wherein
the catalyst in the first reaction chamber includes a plurality of catalysts arranged at predetermined intervals in the axial direction.

4. The NOx reduction device for the exhaust gas of claim 1, wherein
the catalyst in the second reaction chamber spreads over almost the entire cross section of the container orthogonal to the axial direction.
